(19) 

**Europäisches Patentamt**
**European Patent Office**
**Office européen des brevets**

(11)  **EP 4 490 210 B1**

(12)  ## EUROPEAN PATENT SPECIFICATION

(45) Date of publication and mention
of the grant of the patent:
**10.09.2025 Bulletin 2025/37**

(21) Application number: **23707759.9**

(22) Date of filing: **02.03.2023**

(51) International Patent Classification (IPC):
*C08F 265/06* ^(2006.01)      *C09D 5/00* ^(2006.01)
*C09D 151/00* ^(2006.01)

(52) Cooperative Patent Classification (CPC):
(C-Sets available)
**C09D 151/003; C08F 265/06; C09D 5/002;
C09D 15/00** (Cont.)

(86) International application number:
**PCT/EP2023/055312**

(87) International publication number:
**WO 2023/169920 (14.09.2023 Gazette 2023/37)**

(54) **WATERBORNE POLYMER COMPOSITION FOR WOOD APPLICATIONS**

WASSERBASIERTE POLYMERE ZUSAMMENSETZUNG FÜR HOLZANWENDUNGEN

COMPOSITION AQUEUSE DE POLYMÈRE POUR DES APPLICATIONS DE BOIS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.03.2022 EP 22160945**

(43) Date of publication of application:
**15.01.2025 Bulletin 2025/03**

(73) Proprietors:
• **ORGANIK KIMYA SAN. VE TIC. A.S.
34075 Kemerburgaz/Eyup, Istanbul (TR)**
• **Organik Kimya Netherlands BV
3197 KC Botlek Rotterdam (NL)**

(72) Inventors:
• **ARSLAN ÜLKER, Fatma
34075 Kemerburgaz/Eyup, Istanbul (TR)**
• **KONUS, Duygu
34075 Kemerburgaz/Eyup, Istanbul (TR)**
• **ALTINOK, Sibel
34075 Kemerburgaz/Eyup, Istanbul (TR)**

(74) Representative: **Müller-Boré & Partner
Patentanwälte PartG mbB
Friedenheimer Brücke 21
80639 München (DE)**

(56) References cited:
**EP-A1- 3 959 249        EP-A1- 3 964 534
WO-A1-2017/106994    WO-A1-2021/018767
CN-A- 113 292 682      US-B1- 6 288 174**

(52) Cooperative Patent Classification (CPC): (Cont.)

C-Sets
**C08F 265/06, C08F 220/06, C08F 220/1804,
C08F 220/14, C08F 220/58;
C08F 265/06, C08F 220/06, C08F 220/1804,
C08F 220/14, C08F 222/20**

**Description**

The present invention relates to a multistage radical emulsion polymerization process for producing a novel emulsion polymer composition, resulting in discrete particles dispersed in water having a star like structure. The polymer dispersion obtainable by the present invention imparts knot-sealing capability to coating compositions for wood applications. The present invention also relates to use of said polymer dispersion as an indoor and outdoor coating on wood substrates.

Emulsion polymerization is a well-known process for producing water based acrylic emulsions. Due to the increasing strictness of environmental regulations the importance of water-based emulsion polymers is increasing every day. These are dispersions of polymer particles in an aqueous medium and are used in a wide variety of applications such as adhesives, paints, coatings, paper coatings, paper impregnations, textile coatings, wood coatings, construction and building materials such as caulks and sealants, waterproofing roof coatings, cement additives, etc. The importance of emulsion polymerization process has grown significantly since the second half of the 20th century due to a wide variety of applications of water-based latexes. Additionally, the environmental regulations and awareness of the consumers have led to the replacement of solvent based polymers by water-based emulsions. This is true also for manufacturers in the wood industry, especially when considering indoor applications. The coatings applied on wood enters the households through furnitures, doors, flooring and possibly as several other goods. But even if not used indoors, most manufacturers are looking for wood coatings based on water based polymer emulsions, with the same or improved properties compared to solvent based coatings.

Wood contains organic extractives which are water soluble and migrate to the surface of the coatings. This is called extractive bleeding. There are so many types of extractives in wood by its nature. Organic extractives like tannins, flavonoids, terpenes and terpenoids, lignans, fats and waxes are chromophore substances which tend to migrate to surface of wood through knots. Knots are the joints of tree branches and, actually, they are imperfections contained in wooden material. These parts are highly concentrated in terms of polyphenols which can be differentiated as aromatic and aliphatic, and in terms of the resins. Extractive bleeding causes discoloration which occurs as a result of migration of water-soluble organic extractives in wood. This migration causes the color change like yellowish or greenish of the coating. Stilbenes, tannins and flavonoids change colour with light and air. Knots are mainly responsible for bleeding of the extractives, which is not desired by the consumers. The problem of knot bleeding may be a challenging task to solve, especially when considering that the wood may continue to bleed to the surface of a knot taking months or even years to result with a stain on the wooden material.

In the state-of-the-art solvent-borne coating systems, inorganic chelating metals (Zn, Al, Zr) or epoxy binders are mainly used to block this color change and prevent knot-bleeding on wood. These systems are not environmentally friendly and additionally could cause health problems during manufacture and/ or during use. Besides some of these methods are restricted due to environmental regulations.

Unlike solution polymers, emulsion polymers are produced in a heterogeneous, two phase system. Emulsion polymerization is a type of free radical polymerization process which most of the time starts with an emulsion incorporating water, at least one monomer and a surfactant. The resulting polymers produced in such a way are actually polymer particles dispersed in the water phase. In this complicated process surfactants are of paramount importance in order to stabilise the polymer particles, both during and after polymerization. During the polymerization process, surfactants provide sites for particle nucleation, control the particle size and provide colloidal stability as the particles are formed. Thus, besides solubilizing hydrophobic monomers, surfactants in conventional emulsion polymerization process have various functions such as affecting the number and size of the emulsion particles formed, providing stability, as particles continue to grow in the dispersion and during post-polymerization processing. Examples of typical conventional surfactants generally used in emulsion polymerization are anionic surfactants such as fatty acid soaps, alkyl carboxylates, alkyl sulfates and alkyl sulfonates, non-ionic surfactants such as ethoxylated alkylphenol or fatty acids and cationic surfactants such as amines, nitriles, etc.

US 2019/144702 A discloses a process for the preparation of aqueous dispersions of anionic polymers comprising both amine and acid functionality useful as coatings on wood, metal and other surfaces. The coating composition is described to be particularly suitable for use in coating compositions and coatings providing anti-bleed or antimicrobial properties. It is produced in a two-stage polymerization process wherein the alkali soluble resin produced in the first stage is anionic. The resulting coating is a cationic polymer.

According to alkali soluble resin (ASR) supported method for producing aqueous dispersions, oligomer chains give a stabilization system which might be affected by a lot of parameters such as CTA (chain transfer agents), pH range, acid type, etc. In addition, ASR technology is limited by a certain ratio of the ASR resin and the polymeric part. Thus, ASR supported technology does not have the flexibility with ASR/polymer ratios.

Furthermore, in alkali soluble resin (ASR) supported polymerization technique, the first step is to produce an ASR dispersion polymer that, typically, contains 10% by weight or more acid monomer. Subsequently, this ASR necessarily has to be neutralized (=dissolved) before the next step of making the polymer can be carried out. The polymer is typically made as a redox batch reaction because the pH is unfavorable.

Thus, considering the above mentioned and possibly other problems with ASR (alkali soluble resin) supported polymers produced with alkali soluble resins, there is at least a need for a less risky process in terms of processability.

In order to seal the knots and prevent the knot bleeding problem in wood coating applications, several other methods have also been used. For producing cationic binders, in the prior art, a cationic low molecular weight oligomer is prepared by solution polymerization. This oligomer is dispersed in water by treating it with formic acid/water (cationic) and then it is used in emulsion polymerization. Cationic emulsion polymers could be an alternative route for the solution to the problem of knot bleeding, but this route has some difficulties and disadvantages. Cationic polymers cause difficulties in formulating a coating composition due to their cationic charges against anionic charges of other significant ingredients in the coating formulation. Since not completely eliminating solution polymerization and because of formulation difficulties, there has been a need for an alternative method.

US 7,935,757 B2 describes a process for making a cationic vinyl oligomer composition. The described process comprises two different polymerization steps. The first step relates to solution polymerization in order to prepare an oligomer. Then, this oligomer is rendered cationic and used in a second step of emulsion polymerization. The resulting product is described to be beneficial in terms of knot-sealing. Iso-propyl alcohol is used as a solvent and the end product contains 8% of IPA. However, besides the solvents, cationic polymers cause difficulties in formulating a coating composition due to their cationic charges against anionic charges of other significant ingredients in the coating formulation.

CN 110317488 A describes an anti color-bleeding auxiliary agent for a water-based wood coating and a preparation method of anti-color bleeding auxiliary agent.

Coating and paint producers require anionic water-based emulsion polymers in their formulation. Therefore, there is also a need in the state of the art to develop anionic water-borne systems for preventing knot-bleeding, without sacrificing the same properties.

Thus, it is an object of the present invention to provide a water based anionic emulsion polymer to be used in wood applications that prevents knot bleeding at least to the same degree, but preferably in an improved way compared to prior art solution-based systems.

The present invention provides a water-borne system that could prevent knot-bleeding and solve the discoloration problems of the coating applied on wood. The coating system obtainable by the present invention is water-based and therefore it does not contain any solvents. The emulsion polymer composition according to the present invention is obtained by radical emulsion polymerization in water, resulting in discrete dispersed particles having a star like structure and imparting knot-sealing capability to coating compositions for wood applications.

Accordingly, the present invention is as defined in the accompanying claims.

According to the present invention, the glass transition temperature is determined by using the Fox equation, i.e. based on the $T_g$ values of the homopolymers produced by the individual monomers using Fox equation. This empirical relationship states that

$$1/Tg = \Sigma w_i / Tg_i$$

where $T_g$ represents glass transition temperature of the copolymer in absolute temperature units (e.g., Kelvin), $w_i$ is the weight fraction of component $i$, $T_{gi}$ is the glass transition temperature of the homopolymer of component (in absolute temperature units), and the summation is taken over all the components in the copolymer.

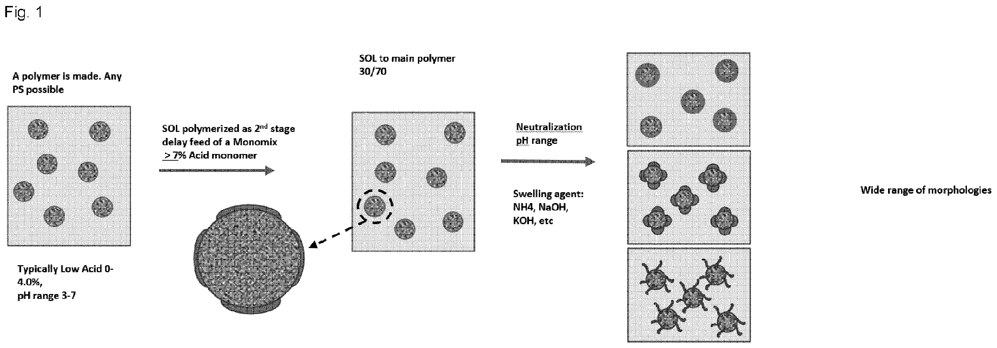

Fig. 1 shows the concept of the present invention.

The emulsion polymers of the present invention are produced by a special version of emulsion polymerization technique to produce star like particles. It does not contain any solvents; therefore, it is environmentally friendly. The product is anionic and is beneficial against knot-bleeding of pine wood when it is formulated as primer.

Star shaped polymers have been firstly disclosed in 1940s as star shaped polyamides. Another disclosure was in 1960s with the first study demonstrating a method to create well defined star shaped polymers through living anionic polymerization. The at least three arms of star shaped polymers may be chemically identical or different. In addition, individual arms may be composed of multiple polymers, resulting in star-block polymers or star copolymers. The unique properties of star-shaped polymers come from their chemical structure as well as the length and number of their arms. Typical star shaped polymers in the state of the art are a class of branched polymers with a structure of at least three linear chains connected to a central core. These are generally used in pharmaceutical industry and typically the linear chains extending from the core are much bigger than the core.

US 9,399,694 B2 discloses a polymer composition comprising one or more star macromolecules formed by an arm-first living controlled radical polymerization and having a core and a plurality of polymeric arms, wherein at least one arm of the plurality of polymeric arms is a hydrophilic arm, and at least one arm of the plurality of arms is a copolymeric arm. The copolymeric arm has different segments in itself in terms of hydrophilicity and the hydrophilic polymeric arm is shorter than the copolymer arm.

Thus, it has already been known in the state of the art to have different polymeric arms in order to impart different properties to said star shaped polymers. However, it has never been described to modify the wet and dry properties of dispersion polymers, by exploiting the ability of dispersed polymer particles' outer layer to swell or dissolve in water under appropriate conditions so that after swelling or dissolving, star shaped particles/ star like particles are formed in the dispersion.

Actually, the star like particles of the present invention are different than what is generally understood from star shaped particles in the prior art. Star shaped particles of the prior art only serve as an inspiration to name the particles of the present invention as star like particles, as used herein and throughout the application. The present invention uses the ability of the dispersed polymer particles' outer layer to swell or dissolve in water under the appropriate conditions of pH, temperature and/or the presence of swelling agents capable of producing that effect on the polymeric outer layer, while the core of the particle remains largely unaffected by that swelling/dissolving process.

The discrete polymer particles dispersed in water are called star like particles according to the present invention, inspired by the star shaped polymers of the prior art. However it has to be made clear that the star like polymer particles of the present invention have a completely different structure than what is generally understood from the star shaped polymers of the prior art.

The dispersed polymer particles obtained by the present invention are spherical and comprise a core and an outer layer. Unlike typical star shaped polymers, they do not have long polymer chains extending from the core. However, the outer layer has the ability to swell under appropriate conditions in order to form a star shape like particle. The swelling of the outer layer does not need to be symmetrical or proportional. The outer layer does not necessarily cover completely the core, so the swelling of the outer layer may lead to a globular pattern. Thus, the swelling does not result with just a bigger particle and forms a shape like a star shaped particle.

The concept of dissolving is clear, well defined in literature and even close to everybody's experience. When a low molecular weight solute such as sugar or salt is added to water, the dissolution process takes place almost immediately. The molecules leave the crystal lattice progressively, disappear into the water, and form a stable, clear solution.

On the other hand, the concept of polymer swelling and dissolving with all its almost infinite intermediate states, amounts up to a much more complex process. Although those concepts are familiar to the person skilled in the art, it has taken a lot of specific work to understand this phenomenon. Polymer molecules, especially those of high molecular weight, behave very differently than sugar or salt. They constitute long chains with a large number of segments, forming tightly folded coils which are even entangled to each other. Numerous cohesive and attractive both intra and intermolecular forces hold these coils together. Based on these features, one may expect noticeable differences in the dissolution behavior shown by polymers. Due to their size, coiled shape and the attraction forces between them, polymer molecules become dissolved quite slowly than low molecular weight molecules. Polymer swelling always precedes dissolution and dissolution only occurs if swelling has taken place, previously. Billmeyer Jr. (1975), for instance, points out that there are two stages involved in this process: in the first place, the polymer undergoes swelling and next the dissolution step itself takes place.

Polymer dissolution behavior differs from dissolution of non-polymeric materials "which dissolve at once". The dissolution of a polymer into a solvent involves two transport processes, namely solvent diffusion and chain disentanglement. When an uncrosslinked, amorphous, glassy polymer is in contact with a thermodynamically compatible solvent (solubility parameters will indicate that), the solvent will diffuse into the matrix of the polymer. Due to plasticization of the polymer by the solvent, a gel-like swollen layer is formed along with two separate interfaces and this stage is described as swelling. After time elapses (an induction time), the polymer enters the second stage and dissolves either entirely or partially or only dispersion of the macromolecules forms without actual dissolving.

When a polymer is added to a given solvent, attraction as well as dispersion forces begin acting between its segments, according to their polarity, chemical characteristics and solubility parameter. If the polymer-solvent interactions are higher than the polymer-polymer attraction forces, the chain segment start to absorb solvent molecules, increasing the volume of the polymer matrix (swelling) and loosening out from their coiled shape.

In polymer dissolution, swelling is the first step in the interaction between liquid molecules and polymeric network, which is usually followed by solvation of polymer chains. The immersion of cross-linked polymers in solvents does not lead to their dissolution because of their chemically bonded hydrocarbon chains; nonetheless, these links do not prevent cross-linked polymers from swelling. (Journal of Thermal Analysis and Calorimetry volume 130, pages 85-93 (2017)). A short and sharp definition of swelling is given by Gugliuzza and Drioli (2007): Swelling of a polymeric material is the penetration of a solvent into the polymer network that causes an abrupt volume change.

As a conclusion, to dissolve a polymer is a process that requires swelling, but that swelling does not necessarily leads to a complete dissolution. A long continuum of intermediate states that starts with swelling, may stop there (a significant volume increase) or continue to stages of higher volume, partial solvation, total solvation of the lower molecular weight (MW) fractions present or of the more polar ones, till the complete dissolution.

For the purpose of the present invention, from different stages of swelling up to the different degrees of dissolution, as expressed hereinbelow, should be understood as the process undergone by the outer layer of the polymer particle while the main part (core) of that polymeric particle remains substantially unaffected by the swelling process.

Since the chemical nature of the swellable/soluble outer layer (SOL) is different from that of the main polymeric part, the physical and chemical properties of the resulting polymer can be manipulated at two different levels or domains to obtain new features and properties from compositions that, taken in their entirety, do not differ much from the state of the art compositions.

According to the present invention, the main polymeric composition (the composition of the core) has to differ from the one constituting the outer layer, at least in the ability to swell/dissolve under the conditions the polymeric outer layer does. Naturally, the main polymeric part (the core) can also, eventually, be swollen or dissolved using the right means and conditions but those means and conditions are not present in any significant way at the moment the swelling/dissolving process of the outer layer takes place.

The outer layer swelling/dissolving conditions can exert some influence on the insoluble main polymeric part which constitutes the core of the particle. For instance, if a radical pH change or high temperatures were needed, the main polymeric part (the core) can for instance moderately expand, be neutralized but without affecting in any significant way its chemical structure, physical state and morphology. It is the outer layer that dramatically changes under these appropriate conditions. Either it becomes definitely water-soluble or it swells to such an extent that the resulting size and morphology substantially differ from those prior to the application of these conditions. Thus, even if there is any change in the core of the particle due to swelling/dissolving conditions of the outer layer, this change is not significant and is negligible especially when compared with the change in swellable/soluble outer layer.

According to an embodiment of the present invention, under the swelling/dissolving conditions of the outer layer, the change in the core is at least 10 times less than the change that occurs in the swellable/soluble outer layer.

The consequences of the process according to the present invention, as described herein is beneficial when it is used in a coating composition, preferably in wood coatings for knot sealing. Beyond the particle shape, the wide range of compositional variations for the main polymeric part as the core and the extent of swelling/dissolving the formulator may decide for a particular swellable/soluble outer layer, together make this technology a powerful tool to modify many properties as well as to achieve new combinations of properties.

The water insoluble polymer parts as the core as well as the swellable/soluble outer layer (SOL) of the present invention are prepared by the multistage radical emulsion polymerization process according to the present invention. The practice of emulsion polymerization is well known and discussed in detail in the literature, for example, in D. C. Blackley, Emulsion Polymerization (Wiley, 1975), and Lovell & El-Aasser (Wiley, 1997). The polymerization temperature is typically from 50°C to 95°C and may also involve use of dispersing agents, initiators, accelerators, emulsifiers, chain transfer agents, etc. As will be readily understood by persons of ordinary skill, dispersing agents and emulsifiers include anionic, cationic or non-ionic agents, polymerization initiators may be of the free radical type, such as ammonium, sodium or potassium persulphates as examples of the inorganic type or organic peroxides such as tert-butyl hydroxy peroxide (t-BHP) and benzoyl peroxide or azo derivatives such as ACVA (4,4'-azobis-4-cyanopentanoic acid). The initiators may be used alone or with an accelerator, such as potassium meta-bisulphite, sodium thiosulphate and sulfoxilates (Rongalithe C$^®$), transition metals salts (Fe$^{2+}$, Cu$^+$). Examples of suitable emulsifiers include, for example, alkaline metal and ammonium salts of alkyl, aryl, alkyl-aryl and aralkyl sulphonates, sulphates, polyether sulphates and alkoxylated derivatives of fatty acids, esters, alcohols, amines, amides and alkylphenols. Chain transfer agents, including mercaptans, polymercaptans and poly-halogen compounds may be used in order to control the molecular weight.

Suitable water insoluble polymer compositions as the main polymeric part (the core) may contain, as polymerized units, from 0 to 4.0% by weight based on the total monomer composition of the main polymeric part, of one or more monoethylenically unsaturated monomers containing an acidic functional group selected from one or more of carboxylic, sulfonic and phosphonic groups. For example, suitable carboxylic acid monomers include, without limitation, monoethylenically unsaturated (C3-C9) carboxylic acid monomers, such as unsaturated monocarboxylic and dicarboxylic acid monomers. For example, unsaturated monocarboxylic acids include acrylic acid (AA), methacrylic acid (MAA), beta-dimethylacrylic acid, ethylidineacetic acid, propylidineacetic acid, crotonic acid, acryloxypropionic acid and alkali and metal salts thereof. Suitable unsaturated dicarboxylic acid monomers include, for example, maleic acid, maleic anhydride, fumaric acid, itaconic acid, citraconic acid, mesaconic acid, methylenemalonic acid and alkali and metal salts thereof.

Additional suitable monoethylenically unsaturated monomers containing sulfonic acid or phosphonic groups include, for example, 2-acrylamido-2-methyl-1-propane-sulfonic acid, 2-methacrylamido-2-methyl-1-propanesulfonic acid, 3-methacryl-amido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 2-sulphoethyl methacrylate, 3-sulfopropyl acrylate, 3-sulfopropyl methacrylate, sulfomethyl acrylamide, sulfomethyl methacrylamide and phosphoethyl methacrylate.

The swellable/soluble outer layer comprises at least 7% by weight of acid functional monomer selected from the list of monomers as mentioned above or any other acid functional monomer. The rest of the monomers for the main polymeric part (the core) may be any kind of monomers. The rest of the monomers for the swellable/soluble outer layer (SOL) may be any kind of monomers capable of copolymerizing with the acid functional monomer(s) that constitute the 7% or more of the outer layer.

Examples of said monomers to be used for the swellable/soluble outer layer (SOL) and also in the main polymeric part, are typically one or more monoethylenically unsaturated monomers as mentioned below.

The one or more monoethylenically unsaturated monomers may be selected from (C1-C20) alkyl (meth)acrylate ester monomers, such as, without limitation, methyl acrylate, ethyl acrylate, propyl acrylate, isopropyl acrylate, butyl acrylate, isobutyl acrylate, secondary butyl acrylate, tertiary-butyl acrylate, methyl methacrylate, ethyl methacrylate, propyl methacrylate, isopropyl methacrylate, cyclopropyl, methacrylate, butyl methacrylate and isobutyl methacrylate, hexyl and cyclohexyl methacrylate, cyclohexyl acrylate, isobornyl methacrylate, 2-ethylhexyl acrylate (EHA), 2-ethylhexyl methacrylate, octyl (meth)acrylate, decyl (meth)acrylate, isodecyl (meth)acrylate, undecyl (meth)acrylate, dodecyl (meth)acrylate (also known as lauryl (meth)acrylate), tridecyl (meth)acrylate, tetradecyl (meth)acrylate (also known as myristyl (meth)acrylate), pentadecyl (meth)acrylate, hexadecyl (meth)acrylate (also known as cetyl (meth)acrylate), heptadecyl (meth)acrylate, octadecyl (meth)acrylate (also known as stearyl (meth)acrylate), nonadecyl (meth)acrylate, isodecyl (meth)acrylate and combinations thereof. Typically, the (C1-C20) alkyl (meth)acrylate esters are (C1-C8) alkyl (meth) acrylate esters and preferably (C1-C8) alkyl acrylate esters; more preferably, the (C1-C20) alkyl (meth)acrylate esters are selected from methyl acrylate, ethyl acrylate, butyl acrylate and 2-ethylhexyl acrylate; most preferably, the acrylate esters are selected from butyl acrylate, 2-ethylhexyl acrylate and methyl methacrylate.

The one or more monoethylenically unsaturated monomers used to prepare the water insoluble polymer binders as the main polymeric part (the core) and the soluble/swellable outer layer (SOL) may comprise one or more vinylaromatic monomers, such as, for example, styrene, α-methyl styrene and substituted styrenes, such as vinyl toluene, 2-bromostyrene, 4-chlorostyrene, 2-methoxystyrene, 4-methoxystyrene, α-cyanostyrene, allyl phenyl ether and allyl tolyl ether, vinyl ester of Versatic acids.

It is also possible for the water insoluble polymer compositions as the main polymeric part (the core) to comprise, as polymerized units, 0.1 to 50%, preferably 0.1 to 25% by weight based on the total amount of monomers of the core of one or more other copolymerizable monomers. Suitable other copolymerizable monomers include, for example, butadiene, acrylonitrile, methacrylonitrile, crotononitrile, alpha-chloroacrylonitrile, ethyl vinyl ether, isopropyl vinyl ether, isobutyl vinyl ether, butyl vinyl ether, diethylene glycol vinyl ether, decyl vinyl ether, ethylene, methyl vinyl thioether and propyl vinyl thioether, esters of vinyl alcohol, amides of ethylenically unsaturated (C3-C6) carboxylic acids that are substituted at the nitrogen by one or two (C1-C4) alkyl groups such as, acrylamide, methacrylamide and N-methylol (meth)acryl-amide.

Additionally, the polymer compositions of main polymeric part and the SOL may comprise from 0.1 to 20% by weight of one or more monoethylenically unsaturated monomers. For example, one or more (meth)acrylic monomers containing one or more pendant reactive functional groups selected from hydroxy, thiol and amino groups. Suitable hydroxy-functional (meth)acrylic monomers include, for example, hydroxyl (C1-C4) alkyl(meth)acrylates, such as hydroxyethyl methacrylate, hydroxyethyl acrylate, hydroxypropyl methacrylate and hydroxypropyl acrylate. Suitable aminofunctional (meth)acrylic monomers include, for example, dimethylaminopropyl methacrylamide, dimethylaminopropyl acrylamide, dimethylaminoethyl methacrylate, dimethylaminoethyl acrylate, dimethyl-aminopropyl methacrylate and dimethylaminopropyl acrylate. Suitable thiol-functional (meth)acrylic monomers include, for example, 2-mercaptopropyl methacrylate.

The main polymeric part (the core) may have any composition known in the art having a glass transition temperature (Tg) of at least 0°C. Basically, all kind of monomer combinations suitable for free radical polymerization or free radical emulsion polymerization are possible. In this context, it does not need to be homogeneous. Actually, all degrees of heterogeneity are allowed, any kind of functionality is possible, it can be single or multi-staged, core-shell, pre-crosslinked or not, cross-linkable or not, hard or soft, mono- or polymodal. The requirement according to the present invention is that whatever polymer it is, it does not dissolve, neither significantly swells, under the conditions the swellable/soluble outer layer (SOL) does.

The swellable/soluble outer layer (SOL) is a composition polymerized onto the main polymer particles' surface, capable of becoming water soluble (or swellable) under certain conditions (pH, temperature and addition of swelling agents) and those conditions are applied after the SOL composition has been polymerized. Thus, according to the present invention, the SOL polymer composition is not water soluble/swellable unless the aforesaid conditions are applied. The glass transition temperature (Tg) of the swellable/soluble outer layer (SOL) is at least 20°C, more preferably at least 40°C.

In many cases, although it is easy to understand for anyone knowledgeable in the art, it is not easy to see the transition from the insoluble to the solubilized state of the swellable/soluble outer layer (SOL) and also from the unswollen to the swollen state of the SOL. For the scope of the present application, a suitable SOL composition for the present invention will be that polymer composition which, once polymerized in water as a single polymer without the core part of the present invention, at customary solids levels, with the help of surfactants, seeds or other adjuvants, produces a milky polymer dispersion that, under the aforesaid conditions, dramatically swells (the polymer undergoes an abrupt change in volume) or even dissolves in the water medium, typically becoming more transparent and producing a remarkable increase in viscosity.

The morphology of the resulting particle after the swellable/soluble outer layer (SOL) dissolution is completely different than that of the well-known in the art colloidally-stabilized polymer particles. Contrary to the customary way of producing colloidally-stabilized dispersion polymers in water, according to the present invention the colloid (the swollen/solubilized SOL after applying certain conditions) is created after the polymerization process has been completed, whereas in the prior art process for producing colloidally-stabilized dispersion polymers, the colloid, polyvinyl alcohol (PVOH), hydroxy ethyl cellulose (HEC), polyvinyl pyrrolidone (PVP), carboxy methyl cellulose (CMC), starch has to be present at the start and/or during the polymerization process. Thus, the star like polymers produced according to the present invention are very different.

Similarly, when the process for producing the star like polymers according to the present invention is compared with the well-known ASR-supported polymerization, the ASR (alkali-soluble-resin) has to be produced prior to the main polymerization and be present at the start of that main polymerization process.

Common to these aforementioned prior art processes, as it is well known in the art, the colloid has to be present preferably at the start in order to increase as much as possible the chances (the statistical probability) of a bonding interaction (grafting) between colloid and growing polymer, so the former can act as the stabilizing agent of the latter. This is the opposite in the process of the present invention.

Due to the fact that the grafting process in the conventional colloidal and ASR-supported classical processes is a probabilistic effect that depends on the type of colloid or ASR (alkali soluble resin) with regard to the polymer they intend to stabilize, as well as on the temperature, pH, amount of catalyst, chain-transfer-agent, etc., even under the most favorable conditions, the expected result is that a certain percentage of the colloid will be linked to the subsequently created polymer particle with the rest remaining dissolved in the water phase. In the process for producing the star shaped polymers of the present invention, the "colloid" (the swollen/solubilized SOL after applying certain conditions) remains covalently linked to the previously created polymer particle.

Other factors that are of primary importance for the classical grafting process above described (such as conventional colloid or ASR supported polymerization processes), like parameters of solubility, viscosity, polarity, ratio colloid/polymer or those parameters regarding the main polymerization reaction itself, such as type/amount of catalyst, reaction temperature, in-process viscosity, are a much lesser problem for the process according to the present invention since the "colloid" (the swollen/solubilized outer layer after applying certain conditions) only shows-up after the whole polymeric process has taken place and the swelling conditions have been applied.

The swellable/soluble outer layer (SOL) composition of the present invention, like the main polymeric parts, may contain all kind of functional monomers and may contain crosslinkable moieties or be pre-crosslinked without departing from the scope of the present invention. Also, like the main polymeric composition, it can be single or multistage. Those stages may differ compositionally. The only requisite according to the present invention is that, whatever the composition of the SOL, given the appropriate conditions, it will undergo swelling/dissolving whereas the main polymeric particle as the core will not.

The main polymeric part (core) and/or the swellable outer layer comprises one or more monomers containing moieties that can crosslink, which are selected from dicarbonyl monomers and/or polyfunctional monomers, preferably dicarbonyl-functional monomers and more preferably diacetone acrylamide. The main polymeric part (core) and/or the swellable outer layer comprises preferably from 0.1 to 10% by weight of crosslinkers, based on the total amount of monomers.

In a preferred embodiment, the condition to apply in order to make the swellable/soluble outer layer to swell or dissolve, is a change in the pH. This mechanism works as well in an anionic environment as in a cationic one. Since most uses of water-dispersed polymers occur in anionic/non-ionic environments, embodiments of the present invention are directed to anionic/non-ionic environments. In this preferred embodiment, a monomer blend is being polymerized into a system of discrete particles dispersed in water. At the end of that monomer feed, a new (second) monomer blend is polymerized (in order to form the swellable/soluble outer layer) whereby that new monomer blend contains a co-polymerizable acid monomer in sufficient amount *versus* the total of that second monomer feed content, that would make the polymer layer resulting from the polymerization of that second feed water-soluble/swellable, if sufficient amount of a base were added. The polymerization process is carried out within a pH range where the polymer of the secondary monomer blend is not significantly swellable/soluble. When the polymerization process is finished, a swelling agent (a base, like ammonia, amines, caustic soda, and the like) is added in sufficient amount so as to raise the pH and bring the swellable/soluble outer layer (SOL) to the desired degree of swelling or dissolution.

Thus, according to the preferred embodiment of the present invention, it suffices that, provided the conditions (amount of base, temperature, solvents, agitation) to achieve the desired level of swelling/dissolving of the outer layer, the main polymeric parts as the core do not swell or dissolve in any significant way. Even if there is any slight swelling or dissolution of the core, this is negligible compared to the swellable/soluble outer layer.

In an embodiment according to the present invention, the star-like polymer is a waterborne anionic polymer comprising 2-EHA/MMA/BA/MAA acrylic monomers in different ratios. Also, the polymer contains diacetone acrylamide and/or adipic acid dihydrazide as the crosslinker system which gives a strength on the structure of polymer film to cover and protect the surface. The system makes self-crosslinking at room temperature and contribute to preventing the leakage of the resin and tannins. In star-shape polymers of the present invention, the second phase (swellable/soluble outer layer) has high amount of acid which provides a linking of acid groups (-COOH) to wood substrate. Thereby, the polymer blocks the migration of extracts from wood and improves the knot-sealing capability.

At the end of polymerization or during the formulation, post additives can be added to further enhance knot bleeding blocking for instance heavy metal complexes, water soluble polymers such as PvOH, polyamines, modified starches, polyamides, polyimines, polyimides, dihydrazides. Said post additives may also be used in order to improve adhesion on wood, tannin and stain blocking.

Star like polymer morphology according to the present invention is a technique that enables the polymer formulator to achieve a different, more advanced balance of performance particularly when it comes to modify the viscoelastic properties of a polymer composition without sacrificing room temperature film formation and surface properties. The emulsion polymer of the present invention does not contain any solvents and therefore it is environmentally friendly. Additionally, it is anionic and has an improved knot sealing property when used as a coating in wood applications, preferably in pinewood.

The polymer of the present invention can also be used in a primer coating formulation for wood applications. It is beneficial for wood coating applications where knot-sealing property is necessary. The product produced according to the method of the present invention exhibits good adhesion on different types of woods, certain sandability, suitable tanning blocking.

The following examples will illustrate some of the main aspects of the invention, but by no means they constitute the entire scope, neither they imply any restriction to it.

**Comparative Example P-0:**

A 2-liter round-bottomed flask is equipped with paddle stirrer, thermometer, nitrogen inlet and reflux condenser. To 220 grams of deionized water 5 gr of a 20% solution of the ammonium salt of a phosphate ester surfactant (Rhodafac RS710®) are added and this solution is heated to 82°C in the flask. There is added 50 grams of a catalyst solution containing 3% ammonium persulfate. This is immediately followed by 25 grams of a monomer emulsion composed of 180g of deionized water, 16 grams of a 20% solution of the ammonium salt of a phosphate ester surfactant (Rhodafac RS710®), 15 grams of methacrylic acid (MAA), 230g of methyl methacrylate (MMA) and 155g of butyl acrylate (BA), 0.6g of Mercapto Propionic Acid, 1.2g of n-Dodecyl Mercaptane. Upon the addition of the 25g, temperature rises to 84-86°C and the remaining monomer emulsion is metered in at a rate of 5 grams/minutes. The reaction mixture is held at a temperature range of 84-86°C. 15-20 min before the monomer emulsion is finished, the temperature inside the reactor is let to increase steadily up to 86°C. Upon termination of the monomer emulsion addition, the reactor is kept at that temperature for about 30 minutes more and then cooled down to 70-75°C. There, a parallel addition of 8 g of a 4% strength t-BHP solution and 8g of a similar strength solution of Bruggolite® SFF6 is performed at a simultaneous metering rate of 0.5g/min. Upon termination of the redox reaction, the reactor is held at same temperature for 15 min more, followed by a neutralization step consisting of the addition of 15g of a 10% strength ammonia solution at a approx. rate of 1 g/min. After cooling down, and with the addition of a few drops of biocide and a defoamer, the reactor content is discharged and filtered to remove any coagulum formed. The final latex product had a 45.29% solids content, a pH of 8.2, a Brookfield viscosity of 120 mPa·s and a particle size (PS) of 139 nm.

**Comparative Example P-1**

The same procedure as in P-0 but where monomer emulsion composed of 180g of deionized water, 16 grams of a 20% solution of the ammonium salt of a phosphate ester surfactant (Rhodafac RS710®), 15 g of 1,4-Butanediol dimethacrylate monomer, 15 grams of methacrylic acid (MAA), 230g of methyl methacrylate (MMA) and 155g of butyl acrylate (BA), 0.6g of Mercapto Propionic Acid, 1.2g of n-Dodecyl Mercaptane. The final latex product had a 46.18% solids content, a pH of 8.1, a Brookfield viscosity of 145 mPa·s and a particle size (PS) of 140 nm.

**Comparative Example P-2**

The same procedure as in P-1 but where two monomer emulsions are prepared; a first monomer emulsion amounting to 70% of the total monomer emulsion and a second monomer emulsion amounting to 30%. The two monomer emulsions herein are prepared as below:

A first monomer emulsion composed of 126g of deionized water, 11.2 grams of a 20% solution of the ammonium salt of a phosphate ester surfactant (Rhodafac RS710®), 10.5 g of 1,4-Butanediol dimethacrylate monomer, 10.5 grams of methacrylic acid (MAA), 150g of methyl methacrylate (MMA) and 119.5g of butyl acrylate (BA), 0.42g of Mercapto Propionic Acid, 0.84g of n-Dodecyl Mercaptane.

A second monomer emulsion composed of 54g of deionized water, 4.5 grams of a 20% solution of the ammonium salt of a phosphate ester surfactant (Rhodafac RS710®), 4.5 grams of 1,4-Butanediol dimethacrylate monomer, 4.5 grams of methacrylic acid (MAA), 80g of methyl methacrylate (MMA) and 35.5g of butyl acrylate (BA), 0.18g of Mercapto Propionic Acid, 0.36g of n-Dodecyl Mercaptane. The final latex product had a 46.16% solids content, a pH of 8.1, a Brookfield viscosity of 160 mPa·s and a particle size (PS) of 141 nm.

**Inventive Example P-3**

The same procedure as in P-2 where two monomer emulsions are prepared; a first monomer emulsion amounting to 70% of the total monomer emulsion and a second monomer emulsion amounting to 30%. The two monomer emulsions herein are prepared as below:

A first monomer emulsion composed of 126g of deionized water, 11.2 grams of a 20% solution of the ammonium salt of a phosphate ester surfactant (Rhodafac RS710®), 10.5 g of 1,4-Butanediol dimethacrylate monomer, 6 grams of methacrylic acid (MAA), 154.5g of methyl methacrylate (MMA) and 119.5g of butyl acrylate (BA), 0.42g of Mercapto Propionic Acid, 0.84g of n-Dodecyl Mercaptane.

A second monomer emulsion composed of 54g of deionized water, 4.5 grams of a 20% solution of the ammonium salt of a phosphate ester surfactant (Rhodafac RS710®), 4.5 grams of 1,4-Butanediol dimethacrylate monomer, 9 grams of methacrylic acid (MAA), 75.5 g of methyl methacrylate (MMA) and 35.5g of butyl acrylate (BA), 0.18g of Mercapto Propionic Acid, 0.36g of n-Dodecyl Mercaptane. Unlike other examples, neutralization step consisting of the addition of 20g of a 10% strength ammonia solution at a approx. rate of 1 g/min. The final latex product had a 46% solids content, a pH of 8.5, a Brookfield viscosity of 195 mPa·s and a particle size (PS) of 151 nm.

**Inventive Example P-4**

The same procedure as in P-3 where two monomer emulsions are prepared including diacetone acrylamide instead of 1,4-Butanediol dimethacrylate for both in the same amount. After polymerization, 51 g of 15% solution of Adipic acid dihydrazide is added as post-additive. The final latex product had a 44.38% solids content, a pH of 8.6, a Brookfield viscosity of 180 mPa·s and a particle size (PS) of 153 nm.

**Comparative Example P-5**

The same procedure as in P-3 where two monomer emulsions are prepared excluding 1,4-Butanediol dimethacrylate for both. The final latex product had a 45.11 % solids content, a pH of 8.5, a Brookfield viscosity of 175 mPa·s and a particle size (PS) of 150 nm.

In the inventive example P3, particle size measurements were made and compared in order to show that the outer layer swells when the pH is increased above 5. Comparative Example P-2 produced particles designed in core/shell morphology. In the synthesis stage thereof, after the core part (first emulsion - inner layer) was synthesized, the next stage (keeping at reaction temperature for 30 min) was performed to prevent free monomer residues, and the sample was taken at this stage. The particle size of this sample was measured as 121 nm. Simultaneously, the core part (first emulsion - inner layer) was synthesized in the trial of Inventive Example P-2. The next stage (keeping at reaction temperature for 30 min) was performed to prevent free monomer residues, and the sample was taken at this stage as well. The particle size of this sample was measured as 119 nm. In the synthesis trials, after the shell part (second emulsion - outer layer) was completed, the sample was taken again before neutralization and the particle size was measured. In this measurement, the particle size results were 140 nm for P-2 and 141 nm for P-3 (cf. Table 1 below). After this step, neutralization was done and the final polymers were synthesized in both trials. Due to the high amount of acid in the outer layer of Inventive Example P-3, it has a tendency to swell and reach a higher particle size. The particle size was measured as 141 nm for P-2 and 151 nm for P-3. This fact indicates a swellable outer layer.

**Table 1**

| Example No | Particle size (nm) - at the end of core part (inner layer) | Particle size (nm) - at the end of shell part (inner layer and outerlayer layer) | Particle size (nm) - final polymer |
|---|---|---|---|
| P-2 | 121 | 140 | 141 |

(continued)

| Example No | Particle size (nm) - at the end of core part (inner layer) | Particle size (nm) - at the end of shell part (inner layer and outerlayer layer) | Particle size (nm) - final polymer |
|---|---|---|---|
| P-3 | 119 | 141 | 151 |

The following Table 2 summarizes the trial parameters regarding the above given examples and the resulting properties.

**Table 2**

| RM | Solid content (%) | P-0 | P-1 | P-2 | P-3 | P-4 | P-5 |
|---|---|---|---|---|---|---|---|
| DIW | | 220.00 | 220.00 | 220.00 | 220.00 | 220.00 | 220.00 |
| RS 710 | 20.0 | 5.00 | 5.00 | 5.00 | 5.00 | 5.00 | 5.00 |
| **Core** | | | | | | | |
| DIW | | 180.0 | 180.0 | 126.0 | 126.0 | 126,0 | 126.0 |
| RS 710 | 20.0 | 16.00 | 16.00 | 11.20 | 11.20 | 11,20 | 11.20 |
| Crosslinker | 100 | | 15 | 10.5 | 10.5 | 10.5 | - |
| MMA | 100 | 230.0 | 230.0 | 150.0 | 154.5 | 154.5 | 154.5 |
| MAA | 100 | 15.00 | 15.00 | 10.50 | 6.00 | 6.00 | 6.00 |
| BA | 100 | 155.00 | 155.00 | 119.50 | 119.50 | 119.50 | 119.50 |
| 3-MPA | 100 | 0.60 | 0.60 | 0.42 | 0.42 | 0.42 | 0.42 |
| n-DDM | 100 | 1.20 | 1.20 | 0.84 | 0.84 | 0.84 | 0.84 |
| | | | | | | | |
| **Shell** | | | | | | | |
| DIW | | | | 54.0 | 54.0 | 54.0 | 54.0 |
| Crosslinker | 100 | | | 4.5 | 4.5 | 4.5 | - |
| RS 710 | 20.0 | | | 4.50 | 4.50 | 4.50 | 4.50 |
| MMA | 100 | | | 80.00 | 75.50 | 75.50 | 75.50 |
| BA | | | | 35.50 | 35.50 | 35.50 | 35.50 |
| MAA | 100 | | | 4.50 | 9,00 | 9 | 9 |
| 3-MPA | 100 | | | 0.18 | 0.18 | 0.18 | 0.18 |
| n-DDM | 100 | | | 0.36 | 0.36 | 0.36 | 0.36 |
| **Trial No** | | **P-0** | **P-1** | **P-2** | **P-3** | **P-4** | **P-5** |
| Solid (%) | | 45.29 | 46.18 | 46.16 | 46.0 | 44.38 | 45.11 |
| pH | | 8.2 | 8.1 | 8.1 | 8.5 | 8.6 | 8.5 |
| Viscosity (mPa·s) | | 120 | 145 | 160 | 195 | 180 | 175 |
| Particle size (nm) | | 139 | 140 | 141 | 151 | 153 | 150 |
| Tg core (°C) (Calculated)* | | 24.1 | 24.1 | 17,6 | 16.7 | 16.7 | 16.7 |
| Tg shell (°C) (Calculated)* | | - | - | 40.5 | 43 | 43 | 43 |
| MFFT (°C) (mesured) | | 35 | 36 | 37 | 36 | 36 | 34 |

(continued)

| Trial No | P-0 | P-1 | P-2 | P-3 | P-4 | P-5 |
|---|---|---|---|---|---|---|
| Monomer ratio in polymer vs. SOL(or shell) | Comparative 100/0 | Comparative 100/0 | Comparative 70/30 | 70/30 | 70/30 | Comparative 70/30 |
| Crosslinker amount (% on monomer) ** | 0 | 3.61 | 2.53/1.08 | 2.53/1.08 | 2.53/1.08 | 0 |
| MAA % on monomer in core / MAA % on monomer in SOL ** | 3.75 / - | 3.61/ - | 3.61 / 3.61 | 2.07 / 7.23 | 2,07/ 7.23 | 2.14/7.50 |

*Crosslinkers are excluded in Tg calculation.
**Crosslinker and MAA amounts included to total monomer amount.
RM = Raw Material
DIW = Deionized water
MAA = Methacrylic acid
MMA = Methyl methacrylate
BA = Butyl acrylate
3-MPA = 3-Mercapto propionic acid
n-DDM = n-Dodecyl mercaptane
RS 710 = Ammonium salt of a phosphate ester surfactant (Rhodafac RS710®)

It is obvious that the increased particle size (PS) values compared with the comparative P-0 is due to the swollen swellable/soluble outer layer (SOL).

The particle sizes are measured with the instrument Malvern Zetasizer Nano-S. The sample to be analyzed is diluted in 10 mM NaCl aqueous (with demineralized water) solution. 1-2 drops of sample are added to 50 mL 10mM NaCl solution. This mixture is placed into measuring PS sample cell by opening the cell area lid. The cell is placed into a cell holder and a thermal cap is placed on the cell. Cell area lid is closed and measurement is started. For each sample 3 measurements are performed and an average result is reported.

The MFFTs (minimum film forming temperatures) are measured with the instrument Rhopoint MFFT 90 Minimum Film Forming Temperature Instrument acording to ISO 2115. After reaching appropriate temperature, the device gives a warning and the ready button is pressed on the touch screen. The polymer to be measured should be drawn as a film in a U shape from cold to hot with a 100 micron applicator. The point where the polymer film is formed shows the minimum film forming temperature.

Application Performance Tests:

Dispersions (emulsions) from the above examples were formulated into pigmented coatings using the ingredients given in Table 3. First a mill base was prepared by high shear mixing. In the let-down stage emulsion together with butyl glycol was added.

Table 3

| | Component | Function | |
|---|---|---|---|
| **Mill base** | Water | Solvent | 92.3 |
| | Natrosol 250 HR | Thickener | 1.6 |
| | Ammonia | Neutralizer | 0.4 |
| | Tegofoamex 1488 | Defoamer | 0.4 |
| | Dispersant ASP 40 | Neutralizer | 1.1 |
| | Titanium dioxide | Pigment | 59.0 |
| | 2 μm Calcite | Filler | 77.7 |
| | Talc | Filler | 38.8 |
| **Let-down** | Dispersion from examples | Resin | 634.2 |
| | Butyl glycol | Solvent | 31.7 |
| | Water | Solvent | 53.7 |
| | Tego Airex 902 W | Defoamer | 1.2 |

(continued)

| Component | Function | |
|---|---|---|
| Tafigel PUR 44 | Thickener | 2.7 |

The properties of resulting emulsion polymers are shown in below Table 4. Said resulting polymers from Examples P-0 to P-5 were formulated into paint formulation according to Table 3 and the results are given in Table 4. The formulations were applied as described above and evaluated.

**Table 4**

| Trial No | P-0 | P-1 | P-2 | P-3 | P-4 | P-5 |
|---|---|---|---|---|---|---|
| ΔE | 11 | 7.2 | 5.2 | 0.8 | 0.3 | 2.1 |
| Gloss 20°/60°/85° (G.U.) | 2.1 / 13.1 /31.1 | 2.3 / 13.1 / 33.1 | 2.2 / 13.2 / 33.3 | 2.3 / 14.9 / 36.4 | 2.3 / 14.9 / 36.6 | 2.4 / 15.1 / 36.8 |
| Hiding Power (%) | 83.1 | 83.2 | 83.7 | 84.9 | 85 | 84.9 |

**Knot Sealing Performance Tests**

Pine knot panels with knots are coated by brush application. Before applications of primers, pine knot panels are sanded for making active the knots. After sanding, the knots are divided into two sides with masking tapes. Half of knots were painted with formulated dispersions from examples. The other half of the knots were painted with formulated conventional polymer. The formulated primers were applied by brush as two layers with a drying time of at least four hours between the applications. As the topcoat a white acrylic waterborne trim paint was applied. The panels were dried for 7 days at room temperature. After curing, the panels are placed in a Q-UV accelerated weathering tester with UV-A radiation for 72 hours. Cycle: 72 hours 45°C UV-A. Panels are checked for knot bleeding after 72 hours.

The discoloration of the knots was determined by measuring the colour of the knots before and after the test and ΔE values describing the change of colour according to the CIE L*a*b* system was calculated. The ΔE values reported are numeric average values of two different panels.

Table 4 shows the results regarding the knot-bleeding performance. If the discoloration of the knots, ΔE, is lower than 1, it means primer blocks pine knot bleeding.

**Determination of Gloss**

Gloss of paints were measured by using BYK micro-TRI-gloss. Films were applied with a wet film thickness of 100 microns on glass and drying the film at 23°C/50% RH for 7 days.

**Determination of Hiding power**

Hiding power of paints were measured by X-Rite Ci60 Spectrophotometer. Films were applied with a wet film thickness of 200 microns on opacity chart and drying at film at 23°C/50% RH for 7 days.

**Claims**

1. A multistage radical emulsion polymerization process for producing a knot sealing polymer dispersion of discrete particles dispersed in water, said process comprising the steps of;

   polymerizing in a first stage a core of the discrete particles, as the main polymeric part comprising 0 to 4% by weight of one or more monoethylenically unsaturated monomers containing an acid functional group based on the total monomer composition of the main polymeric part, wherein the glass transition temperature (Tg) of the main polymeric part is at least 0°C,

   polymerizing in a second stage a swellable/soluble outer layer as the second polymeric part comprising at least 7% by weight of one or more monoethylenically unsaturated monomers containing an acid functional group based on the total monomer composition of the swellable/soluble outer layer, wherein the glass transition temperature (Tg) of the second polymeric part is at least 20°C,

wherein the main polymeric part and/or the swellable/ soluble outer layer comprises one or more monomers containing moities that can crosslink,

wherein the swellable/soluble outer polymeric layer is polymerized onto the surface of the main polymeric part and the amount of swellable/soluble outer layer represents between 10% to 50% by weight of the total polymeric composition and

adding a swelling agent selected from a base in sufficient amount as to raise the pH above 5 and bring the swellable/soluble outer layer (SOL) to the desired degree of swelling or dissolution, while the main particle remains substantially unaffected,

wherein the one or more monomers containing moities that can crosslink, are selected from dicarbonyl monomers and/or polyfunctional monomers,

wherein the Tg is determined by using the Fox equation.

2. The process according to claim 1, wherein the swellable/soluble outer layer comprises at least 0.5% to 10% by weight of a monomer containing moities that can crosslink, based on the total monomer composition of the swellable/soluble outer layer.

3. The process according to claim 1 or 2, wherein the monomer of the swellable/soluble outer layer and/or the main polymeric part that contains moities that can crosslink is diacetone acrylamide monomer and/or adipic acid dihydrazide.

4. The process according to claims 1 to 3, wherein the amount of swellable/soluble outer layer represents between 15% to 35% by weight of the total polymeric composition.

5. The process according to claims 1 to 4, wherein the amount of swellable/soluble outer layer represents between 20% to 30% by weight of the total polymeric composition.

6. The process according to anyone of claims 1 to 5, wherein the swellable/soluble outer layer is composed of a polymer containing from 10% to 30% by weight of one or more monoethylenically unsaturated monomers containing an acid functional group selected from one or more of carboxylic, sulfonic and phosphonic groups, particularly one or more mono- or dicarboxylic-functional monomer, their anhydrides and their salts, based on the total monomer composition of the swellable/soluble outer layer.

7. The process according to claim 6, wherein the carboxylic-functional monomer is selected from acrylic acid, methacrylic acid, itaconic acid, AMPS (2-acrylamido-2-methylpropansulfonic acid, vinylsulfonic acid, or phosphate esters of polypropylene glycol monomethacrylate.

8. The process according to anyone of the preceding claims, wherein the non-acid-functional monomers completing the swellable/soluble outer layer composition up to 100% by weight are selected from any monomer combination capable of copolymerizing with the one or more monoethylenically unsaturated monomers containing an acid functional group selected from one or more of carboxylic, sulfonic and phosphonic groups.

9. The process according to claim 8, wherein the one or more non-acid-functional monomer(s) completing the composition of the swellable/soluble outer layer are selected from monomers comprising styrene and $\alpha$-methyl-styrene; vinyl acetate, vinyl propionate, vinyl chloride, veova-9 and 10, butyl acrylate, n-butyl methacrylate, methyl methacrylate, ethyl acrylate, 2-ethylhexyl acrylate, and combinations thereof.

10. The process according to claim 9, wherein up to 30% of the non-acid-functional monomer(s) are monomers of specific functionality capable of conferring or enhancing a specific property to the swellable/soluble outer layer and are selected from nitrogen-containing monomers, epoxy, hydroxy and carbonyl functional monomers, polyunsaturated monomers, dicarbonyl monomers, silane-functional or phosphate functional monomers.

11. The process according to anyone of claims 1 to 10, wherein in the second stage, the one or more monoethylenically unsaturated monomers containing an acidic functional group is from 7.5% to 20% by weight based on the total monomer composition of the swellable/soluble outer layer polymerized in the second stage.

12. The process according to anyone of claims 1 to 11, wherein in the second stage, the one or more monoethylenically unsaturated monomers containing an acidic functional group is at least 10% by weight based on the total monomer composition of the swellable/soluble outer layer polymerized in the second stage.

13. A polymer dispersion of discrete particles dispersed in water obtained by the process according to anyone of claims 1 to 12.

14. Use of the polymer dispersion of claim 13 as an indoor and outdoor coating composition for wood substrates or any wood based material in order to prevent knot bleeding.

**Patentansprüche**

1. Mehrstufiges radikalisches Emulsionspolymerisationsverfahren zur Herstellung einer Ast-versiegelnden Polymerdispersion aus in Wasser dispergierten diskreten Teilchen, wobei das Verfahren die folgenden Schritte umfasst:

in einer ersten Stufe Polymerisieren eines Kerns der diskreten Teilchen, als der Hauptpolymerteil, der 0 bis 4 Gew.-% eines oder mehrerer monoethylenisch ungesättigter Monomere mit einer säurefunktionellen Gruppe umfasst, bezogen auf die gesamte Monomerzusammensetzung des Hauptpolymerteils, wobei die Glasübergangstemperatur (Tg) des Hauptpolymerteils mindestens 0°C beträgt,
in einer zweiten Stufe Polymerisieren einer quellbaren/löslichen äußeren Schicht, als der zweite Polymerteil, die mindestens 7 Gew.-% eines oder mehrerer monoethylenisch ungesättigter Monomere mit einer säurefunktionellen Gruppe,
bezogen auf die gesamte Monomerzusammensetzung der quellbaren/löslichen äußeren Schicht, umfasst, wobei die Glasübergangstemperatur (Tg) des zweiten Polymerteils mindestens 20 °C beträgt,
wobei der Hauptpolymerteil und/oder die quellbare/lösliche äußere Schicht ein oder mehrere Monomere, enthaltend Einheiten, die vernetzen können, umfasst,
wobei die quellbare/lösliche äußere Polymerschicht auf die Oberfläche des Hauptpolymerteils polymerisiert wird und die Menge der quellbaren/löslichen äußeren Schicht zwischen 10 und 50 Gew.-% der gesamten Polymerzusammensetzung beträgt, und
Hinzufügen eines Quellmittels, ausgewählt aus einer Base, in ausreichender Menge, um den pH-Wert über 5 zu erhöhen und die quellbare/lösliche äußere Schicht (SOL) auf den gewünschten Quell- oder Auflösungsgrad zu bringen, während das Hauptteilchen im Wesentlichen unberührt bleibt, wobei das eine oder die mehreren Monomere, die Einheiten enthalten, die vernetzen können, ausgewählt sind aus Dicarbonylmonomeren und/oder polyfunktionellen Monomeren,
wobei die Tg unter Verwendung der Fox-Gleichung bestimmt wird.

2. Verfahren nach Anspruch 1, wobei die quellbare/lösliche äußere Schicht mindestens 0,5 bis 10 Gew.-% eines Monomers, enthaltend Einheiten, die vernetzen können, umfasst, bezogen auf die gesamte Monomerzusammensetzung der quellbaren/löslichen äußeren Schicht.

3. Verfahren nach Anspruch 1 oder 2, wobei das Monomer der quellbaren/löslichen äußeren Schicht und/oder des Hauptpolymerteils, das Einheiten enthält, die vernetzen können, Diacetonacrylamidmonomer und/oder Adipinsäuredihydrazid ist.

4. Verfahren nach den Ansprüchen 1 bis 3, wobei die Menge der quellbaren/löslichen äußeren Schicht zwischen 15 und 35 Gew.-% der gesamten Polymerzusammensetzung beträgt.

5. Verfahren nach den Ansprüchen 1 bis 4, wobei die Menge der quellbaren/löslichen äußeren Schicht zwischen 20 und 30 Gew.-% der gesamten Polymerzusammensetzung beträgt.

6. Verfahren nach einem der Ansprüche 1 bis 5, wobei die quellbare/lösliche äußere Schicht aus einem Polymer aufgebaut ist, das 10 bis 30 Gew.-% eines oder mehrerer monoethylenisch ungesättigter Monomere mit einer säurefunktionellen Gruppe enthält, die aus einer oder mehreren von Carboxyl-, Sulfon- und Phosphongruppen ausgewählt ist, insbesondere ein oder mehrere Monomere mit Mono- oder Dicarboxylfunktionen, deren Anhydride und deren Salze, bezogen auf die gesamte Monomerzusammensetzung der quellbaren/löslichen äußeren Schicht.

7. Verfahren nach Anspruch 6, wobei das carboxylfunktionelle Monomer aus Acrylsäure, Methacrylsäure, Itaconsäure, AMPS (2-Acrylamido-2-methylpropansulfonsäure), Vinylsulfonsäure oder Phosphatestern von Polypropylenglykolmonomethacrylat ausgewählt ist.

8. Verfahren nach einem der vorhergehenden Ansprüche, wobei die nicht-säurefunktionellen Monomere, welche die Zusammensetzung der quellbaren/löslichen äußeren Schicht bis zu 100 Gew.-% vervollständigen, aus jeder beliebigen Monomerkombination ausgewählt werden, die mit dem einen oder den mehreren monoethylenisch ungesättigten Monomeren copolymerisieren kann, die eine säurefunktionelle Gruppe enthalten, die aus einer oder mehreren von Carboxyl-, Sulfon- und Phosphongruppen ausgewählt ist.

9. Verfahren nach Anspruch 8, wobei das eine oder die mehreren nicht-säurefunktionellen Monomere, welche die Zusammensetzung der quellbaren/löslichen äußeren Schicht vervollständigen, aus Monomeren ausgewählt sind, die Styrol und $\alpha$-Methylstyrol, Vinylacetat, Vinylpropionat, Vinylchlorid, Veova-9 und 10, Butylacrylat, n-Butylmethacrylat, Methylmethacrylat, Ethylacrylat, 2-Ethylhexylacrylat und Kombinationen davon umfassen.

10. Verfahren nach Anspruch 9, wobei bis zu 30 % des/der nicht-säurefunktionellen Monomers/Monomere Monomere mit einer spezifischen Funktionalität sind, die der quellbaren/löslichen äußeren Schicht eine spezifische Eigenschaft verleihen oder verstärken können, und ausgewählt sind aus stickstoffhaltigen Monomeren, epoxy-, hydroxy- und carbonylfunktionellen Monomeren, mehrfach ungesättigten Monomeren, Dicarbonylmonomeren, silanfunktionellen oder phosphatfunktionellen Monomeren.

11. Verfahren nach einem der Ansprüche 1 bis 10, wobei in der zweiten Stufe das eine oder die mehreren monoethylenisch ungesättigten Monomere, die eine saure funktionelle Gruppe enthalten, 7,5 bis 20 Gew.-%, bezogen auf die gesamte Monomerzusammensetzung der in der zweiten Stufe polymerisierten quellbaren/löslichen äußeren Schicht, ausmachen.

12. Verfahren nach einem der Ansprüche 1 bis 11, wobei in der zweiten Stufe das eine oder die mehreren monoethylenisch ungesättigten Monomere, die eine saure funktionelle Gruppe enthalten, mindestens 10 Gew.-%, bezogen auf die gesamte Monomerzusammensetzung der in der zweiten Stufe polymerisierten quellbaren/löslichen äußeren Schicht, ausmachen.

13. Polymerdispersion aus in Wasser dispergierten diskreten Teilchen, erhalten durch das Verfahren gemäß einem der Ansprüche 1 bis 12.

14. Verwendung der Polymerdispersion nach Anspruch 13 als Beschichtungszusammensetzung für Holzsubstrate oder beliebige Holzmaterialien im Innen- und Außenbereich, um das Astbluten zu verhindern.

**Revendications**

1. Procédé de polymérisation radicalaire en émulsion multi-étapes pour produire une dispersion polymère couvre-nœuds de particules discrètes dispersées dans de l'eau, ledit procédé comprenant les étapes consistant à :

   polymériser dans une première étape un noyau des particules discrètes, en tant que partie polymère principale comprenant 0 à 4 % en poids d'un ou plusieurs monomères à insaturation monoéthylénique contenant un groupe fonctionnel acide basés sur la composition monomère totale de la partie polymère principale,
   dans lequel la température de transition vitreuse (Tg) de la partie polymère principale est d'au moins 0 °C,
   polymériser dans une seconde étape une couche externe pouvant être gonflée/soluble en tant que seconde partie polymère comprenant au moins 7 % en poids d'un ou plusieurs monomères à insaturation monoéthylénique contenant un groupe fonctionnel acide basés sur la composition monomère totale de la couche externe pouvant être gonflée/soluble, dans lequel la température de transition vitreuse (Tg) de la seconde partie polymère est d'au moins 20 °C,
   dans lequel la partie polymère principale et/ou la couche externe pouvant être gonflée/soluble comprend un ou plusieurs monomères contenant des groupes caractéristiques qui peuvent se réticuler,
   dans lequel la couche polymère externe pouvant être gonflée/soluble est polymérisée sur la surface de la partie polymère principale et la quantité de couche externe pouvant être gonflée/soluble représente entre 10 % et 50 % en poids de la composition polymère totale, et
   ajouter un agent gonflant sélectionné parmi une base en quantité suffisante pour augmenter le pH au-dessus de 5 et amener la couche externe pouvant être gonflée/soluble (SOL) au degré de gonflement ou dissolution souhaité tandis que la particule principale reste essentiellement non affectée,
   dans lequel le ou les monomères contenant des groupes caractéristiques qui peuvent se réticuler sont sélectionnés parmi des monomères de dicarbonyle et/ou monomères polyfonctionnels,
   dans lequel la Tg est déterminée en utilisant l'équation de Fox.

**2.** Procédé selon la revendication 1, dans lequel la couche externe pouvant être gonflée/soluble comprend au moins 0,5 % à 10 % en poids d'un monomère contenant des groupes caractéristiques qui peuvent se réticuler, basées sur la composition monomère totale de la couche externe pouvant être gonflée/soluble.

**3.** Procédé selon la revendication 1 ou 2, dans lequel le monomère de la couche externe pouvant être gonflée/soluble et/ou la partie polymère principale qui contient des groupes caractéristiques qui peuvent se réticuler est un monomère d'acrylamide de diacétone et/ou le dihydrazide d'acide adipique.

**4.** Procédé selon les revendications 1 à 3, dans lequel la quantité de couche externe pouvant être gonflée/soluble représente entre 15 % et 30 % en poids de la composition polymère totale.

**5.** Procédé selon les revendications 1 à 4, dans lequel la quantité de couche externe pouvant être gonflée/soluble représente entre 20 % et 30 % en poids de la composition polymère totale.

**6.** Procédé selon l'une quelconque des revendications 1 à 5, dans lequel la couche externe pouvant être gonflée/soluble est composée d'un polymère contenant de 10 % à 30 % en poids d'un ou plusieurs monomères à insaturation monoéthylénique contenant un groupe fonctionnel acide sélectionné parmi un ou plusieurs de groupes carboxyliques, sulfoniques et phosphoniques, notamment un ou plusieurs monomères à fonctionnalité mono- ou dicarboxylique, leurs anhydrides et leurs sels, basés sur la composition monomère totale de la couche externe pouvant être gonflée/soluble.

**7.** Procédé selon la revendication 6, dans lequel le monomère à fonctionnalité carboxylique est sélectionné parmi l'acide acrylique, l'acide méthacrylique, l'acide itaconique, AMPS (acide 2-acrylamido-2-méthylpropanesulfonique), l'acide vinylsulfonique ou des esters de phosphate de monométhacrylate de polypropylène glycol.

**8.** Procédé selon l'une quelconque des revendications précédentes, dans lequel les monomères à fonctionnalité non acide complétant la couche externe pouvant être gonflée/soluble jusqu'à 100 % en poids sont sélectionnés parmi toute combinaison monomère capable de copolymériser avec le ou les monomères à insaturation monoéthylénique contenant un groupe fonctionnel acide sélectionné parmi un ou plusieurs de groupes carboxyliques, sulfoniques et phosphoniques.

**9.** Procédé selon la revendication 8, dans lequel le ou les monomère(s) à fonctionnalité non acide complétant la composition de la couche externe pouvant être gonflée/soluble sont sélectionnés parmi des monomères comprenant le styrène et le $\alpha$-méthyl-styrène ; l'acétate de vinyle, le propionate de vinyle, le chlorure de vinyle, veova-9 et 10, l'acrylate de butyle, le méthacrylate de n-butyle, le méthacrylate de méthyle, l'acrylate d'éthyle, l'acrylate de 2-éthylhexyle et des combinaisons de ceux-ci.

**10.** Procédé selon la revendication 9, dans lequel jusqu'à 30 % du/des monomère(s) à fonctionnalité non acide sont des monomères de fonctionnalité spécifique capables de conférer ou d'amplifier une propriété spécifique à la couche externe pouvant être gonflée/soluble et sont sélectionnés parmi des monomères contenant de l'azote, des monomères à fonctionnalité époxy, hydroxy et carbonyle, des monomères polyinsaturés, des monomères de dicarbonyle, des monomères à fonctionnalité silane ou fonctionnalité phosphate.

**11.** Procédé selon l'une quelconque des revendications 1 à 10, dans lequel dans la seconde étape, le ou les monomères à insaturation monoéthylénique contenant un groupe fonctionnel acide vont de 7,5 % à 20 % en poids basés sur la composition monomère totale de la couche externe pouvant être gonflée/soluble polymérisée dans la seconde étape.

**12.** Procédé selon l'une quelconque des revendications 1 à 11, dans lequel dans la seconde étape, le ou les monomères à insaturation monoéthylénique contenant un groupe fonctionnel acide sont d'au moins 10 % en poids basés sur la composition monomère totale de la couche externe pouvant être gonflée/soluble polymérisée dans la seconde étape.

**13.** Dispersion polymère de particules discrètes dispersées dans de l'eau obtenue par le procédé selon l'une quelconque des revendications 1 à 12.

**14.** Utilisation de la dispersion polymère selon la revendication 13 en tant que composition de revêtement intérieur et extérieur pour des substrats en bois ou tout matériau à base de bois afin d'empêcher le saignement des nœuds.

Fig. 1

A polymer is made. Any PS possible

SOL polymerized as 2^nd stage delay feed of a Monomix > 7% Acid monomer

SOL to main polymer 30/70

Neutralization pH range

Swelling agent: NH4, NaOH, KOH, etc

Wide range of morphologies

Typically Low Acid 0-4.0%, pH range 3-7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019144702 A
- US 7935757 B2
- CN 110317488 A
- US 9399694 B2

**Non-patent literature cited in the description**

- *Journal of Thermal Analysis and Calorimetry*, 2017, vol. 130, 85-93
- **D. C. BLACKLEY**. Emulsion Polymerization. Wiley, 1975